(19) Europäisches Patentamt
European Patent Office
Office européen des brevets

(11) **EP 2 702 655 B1**

(12) **EUROPEAN PATENT SPECIFICATION**

(45) Date of publication and mention
of the grant of the patent:
**08.09.2021 Bulletin 2021/36**

(21) Application number: **12722706.4**

(22) Date of filing: **11.05.2012**

(51) Int Cl.:
*H02H 3/02* *(2006.01)*     *H02H 3/087* *(2006.01)*
*H02H 7/12* *(2006.01)*     *H02H 7/30* *(2006.01)*
*H02H 9/02* *(2006.01)*

(86) International application number:
**PCT/EP2012/058797**

(87) International publication number:
**WO 2013/167199 (14.11.2013 Gazette 2013/46)**

(54) **METHOD AND APPARATUS FOR CLEARING A FUSE IN A SINGLE OUTPUT MULTI LOAD CONFIGURATION**

VERFAHREN UND VORRICHTUNG ZUR TRENNUNG EINER SCHMELZSICHERUNG IN EINER MEHRLASTKONFIGURATION MIT EINEM EINZIGEN AUSGANG

PROCÉDÉ ET APPAREIL DE FUSION D'UN FUSIBLE DANS UNE CONFIGURATION À UNE SEULE SORTIE ET À CHARGES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.03.2014 Bulletin 2014/10**

(73) Proprietor: **Huawei Technologies Co., Ltd.**
**Longgang District**
**Shenzhen, Guangdong 518129 (CN)**

(72) Inventors:
• **REASON, Colin**
**S-16494 Kista (SE)**

• **RUNDKVIST, Kjell**
**S-16494 Kista (SE)**

(74) Representative: **Gill Jennings & Every LLP**
**The Broadgate Tower**
**20 Primrose Street**
**London EC2A 2ES (GB)**

(56) References cited:
**EP-A1- 1 852 951     EP-A1- 2 068 414**
**DE-A1- 3 517 556     DE-A1-102008 056 581**
**US-A1- 2007 008 664     US-A1- 2012 162 841**

• **None**

## Description

### Technical field

The present invention relates to power distribution architectures where a semiconductor controlled power distributor having a number of output channels is providing power via one of its dedicated outputs to a load which is itself made of several separate loads which each are provided with their own melting fuse. More specifically the present invention relates to a method and an apparatus for disconnection of a faulty load in such a single output multi load configuration.

### Background of the invention

The invention background relates to power distribution architectures where a semiconductor controlled power distributor having a number of output channels, is providing power via one of its dedicated outputs to a load which is itself made of several separate loads and where for protection and safety, all of the said loads are fitted with their own integral electrical fusing device such as a common encased melting metal fuse filament as is commonly supplied and used for electrical products.

The desired operational characteristics of the controlled power distributor are a voltage and a current and these can be selected and monitored for their operational levels. According to the prior art, in case the voltage and current exceeds predefined and set limits, that are considered applicable for continued safe operation of the end load, the controlled power distributor is arranged to shut down the output associated with the load. The speed at which the controlled power distributor can turn off power to a load far exceeds the clearing speed of a typical melting metal fuse filament. Any one of the loads that are connected in parallel may present a fault condition whereby its normal operational load current is increased to a level that would clear the melting fuse connected to the load. However, the high load current that occurs when a load has failed may lead to the controlled power distributor exceeding its preset limits and itself responding by removing power to the common power feed and thus turning off all loads that are connected to it before the fused connected to the faulty load has cleared.

In a situation where the operation of at least some of the loads are crucial to the operation of a larger system it is desirable that only the faulty load is isolated by disconnecting it from the controlled power distributor allowing for the continued operation of the loads connected in parallel with it.

Documents EP1852951 and US2007/008664 disclose a power distribution unit for providing power during normal operation and a fuse clearing circuit in parallel to provide additional current to open the fuse or circuit breaker associated with short-circuited load.

### Summary of the invention

The object of the present invention is to provide a method and an apparatus which disconnect a faulty load from a controlled power distributor while the loads connected in parallel to the faulty load are still provided with electrical power.

Another object of the present invention is to provide a method and an apparatus for clearing the melting fuse of a faulty load connected in parallel with a number of other loads to a controlled power distributor.

At least one of these objects is provided with a method and an apparatus according to the independent claims. Further advantages of the invention are provided with the features of the dependent claims will be apparent from the following detailed description.

In a first aspect, a method for controlling a control circuit is provided.

With the method according to the invention the fuse of a faulty load may be cleared. By clearing the fuse the faulty load is disconnected. In order to clear a fuse a sufficient amount of energy has to be provided to melt the melting fuse filament. Fuses are normally rated with respect to their melting characteristics. This is the point at which the fuse wire will start to melt under predefined operational conditions. This is expressed in Ampere squared seconds or $A^2t$. This is the nominal energy required in the fuse to cause melting and is the precursor to the final fuse clearing (opening) stage which is also expressed in terms of an $A^2t$ value. At least one of the first and second electric pulses may provide enough energy to the fault to clear the fuse of the faulty load.

Fuse characteristics may be defined as fuse clearing energy ($I^2t$) = fuse melting ($I^2t$) + fuse arcing ($I^2t$) and defines the energy required to clear or open a fuse under nominal operational conditions and is considered a constant value and as such is not effected by operational temperature or voltage seen by the fuse. For the purpose of this patent it is sufficient to know that the fuse clearing energy requirement is expressed in Joules and presented as $A^2t$. It is this parameter that is used to calculate the minimum energy required to clear the fuse connected to the faulty load.

Apart from ensuring that the energy in at least one of the pulses is sufficiently high to ensure clearing of the fuse having the highest nominal clearing energy it is also important to ensure that the energy developed within the control circuit does not exceed the maximum safe $A^2t$ energy rating of the respective components in the control circuit.

The method is primarily intended for control circuits using semiconductor technology according to the Telecoms SELV limits, i.e., using voltages <60V DC. However, the method of the patent may be used also for higher operating voltages.

The first electric pulse corresponds to a high impedance fault assumption method, i.e., a method that is suitable for clearing the fuse when the load still has relatively high impedance. This situation may correspond to, e.g., a bad bearing in an electric fan. The second electric pulse corresponds to a low impedance fault assumption method, i.e., a method which is suitable for clearing the fuse when the load has low impedance. This situation may correspond to, e.g., a short circuit in an electric fan. Only one method at a time is applied in response to a load fault condition.

According to the invention it is possible to provide the first electric pulse as a response to the total current during normal operation exceeding the nominal preset current limit.

The method may also comprise the step of measuring the current during normal operation after the end of the first electric pulse and in case the current exceeds the nominal preset current limit, providing the second electric pulse to the loads with the purpose of clearing the fuse connected in series with the faulty load. By adding this step it is controlled after the first electric pulse whether the fuse of the faulty load has been cleared or not. If the fuse has not been cleared the second electric pulse is sent out. If on the other hand the fuse has been cleared it is not necessary to send out the second electric pulse. In this way the unnecessary stress on the control circuit that the second electric pulse would cause is avoided.

The method also comprises the step of providing the second electric pulse to the loads during a preset second time period after the first electric pulse, wherein the current in the second electric pulse is higher than the current in the first electric pulse and wherein the second time period is shorter than the first time period. Thus, the second electric pulse is sent out irrespective of whether the fuse has been cleared or not. It might be easier to implement such a solution.

The second electric pulse may be provided by a fuse clearing circuit which is a part of the control circuit but separate from the controlled power distributor. By having such a fuse clearing circuit the control circuit may be arranged as a standard control circuit used in the prior art with an addition in the form of the fuse clearing circuit.

The first electric pulse may be provided by the controlled power distributor which provides the electrical loads with electric power. In this way the part of the control circuit providing the first electric pulse may be a standard circuit as used in the prior art which is only controlled in a different way. The first electric pulse may be provided by driving the controlled power distributor essentially at its maximum output current.

The energy in the first pulse is preferably sufficiently high to allow the fuse having the highest fuse clearing energy and being connected to the highest fault impedance, to be cleared. Alternatively or additionally the energy in the second pulse may be sufficiently high to allow the fuse having the highest fuse clearing energy to be cleared. To be able to clear anyone of the fuses the energy in the electric pulses has to be sufficiently high. At least one of the first electric pulse and the second electric pulse has to be able to provide the clearing energy to anyone of the fuses. This means that the energy in at least one of the electric pulses has to be high enough to allow the fuse having the highest fuse clearing energy to be cleared when it is connected to a predetermined high fault impedance. Thus, the highest impedance that is defined as a fault is predetermined.

The length of the first pulse may be 100-3000 ms. This is a suitable time length for most fuses and is based on the maximum power distribution capability of the power distributor and is in line with the highest $A^2t$ of the series in line fuse of any one of the loads. In some cases it might be favourable to have a length of the first pulse above or below said interval.

The length of the second pulse may be 30-150 ms. This is a suitable time length for most fuses and is based on the series resistor power rating and the power handling of the series MOSFET. In some cases it might be favourable to have a length of the second pulse above or below said interval.

In a second aspect, a control circuit adapted to perform the method according to the first aspect or any of its specific embodiments is provided.

The control circuit provides the same advantages as has been described in relation to the first aspect of the invention.

**Brief description of the drawings**

In the following preferred embodiments of the invention will be described with reference to the appended drawings in which:

Figure 1 shows a control circuit connected to three different loads which are connected in parallel to each other and which each are connected in series with a fuse.

Figure 2 shows in more detail the control circuit with loads, in which the control circuit comprises a controlled power distributor and a fuse clearing circuit according to a first implementation of the present invention.

Figure 3 shows the fuse clearing circuit of the control circuit according to a second implementation of the present invention.

Figure 4 shows the relationship between the discharge of the capacitor of the fuse clearing circuit and the on time of the fuse clearing circuit control pulse.

Figure 5 shows the fuse clearing sequence to clear the fuse of a faulty load.

Figure 6 shows an electric pulse sequence whereby the load impedance is measured and the fuse clearing process is selected based on the measured impedance in accordance with an illustrative example provided to enable better understanding of the present invention.

## Detailed description of embodiments of the invention

In the following description of preferred embodiments of the invention similar features will be denoted with the same reference numeral.

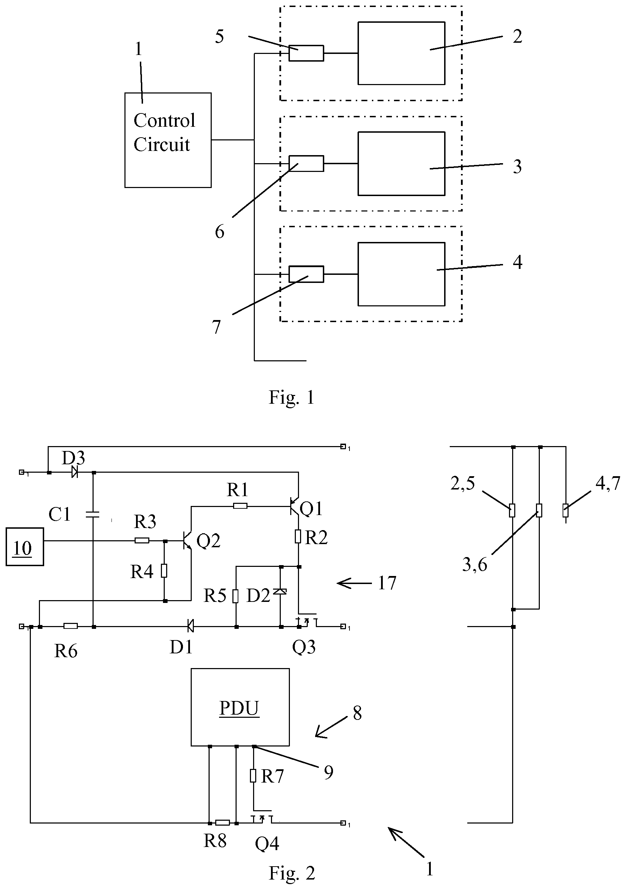

Figure 1 shows a control circuit 1 which is connected to a number of loads 2-4. Each load is connected in series with a respective fuse 5-7. The loads 2-4 are connected in parallel to the control circuit 1.

Figure 2 shows in more detail the control circuit with loads, in which the control circuit comprises a controlled power distributor and a fuse clearing circuit according to a first implementation of the present invention. In Figure 2 the loads and their respective fuses are shown as separate units. The control circuit comprises a controlled power distributor 8 which is arranged to provide current to the loads 2-4 during normal operation. The controlled power distributor 8 is also arranged to provide a first electric pulse in order to clear the fuse of a faulty load 2-4 connected to the control circuit 1. The control circuit 1 also comprises a fuse clearing circuit 7 which is arranged to provide a second electric pulse to clear the fuse of a faulty load 2-4 connected to the control circuit 1. The controlled power distributor 8 comprises a power distribution unit PDU which controls a controllable semiconductor device in the form of a MOSFET Q4 via its control output 9 and a resistor R7. The PDU is also arranged for measurements of various operational attributes. One such measurement is the current pulled by a load that is connected to its output. Current measurement is achieved with the use of R8 and the respective interface circuitry enclosed within the PDU. The function of the PDU is to provide a voltage and a current to an end load whilst monitoring the level of current supplied to the said load and in so doing comparing the measured current with preset levels that reflect the normal operation current for the loads.

The PDU is set with a nominal preset current limit which corresponds to a maximum total current of the loads during normal operation. In case the PDU detects that the current exceeds the nominal preset current limit it will turn the current off and will send out a first electric pulse to the loads during a predetermined first time period. The current in the first electric pulse is set by the PDU to a clearing current limit by resetting its current limit to the PDU maximum rated value. The current to the loads will then ultimately be limited by the fault impedance and the voltage source and cable impedance to the load. However, if the clearing current limit of the PDU is exceeded the current is turned off. The described process is called the high impedance fuse clearing process.

In case the fault presented within the load has very low impedance such that the maximum current set point selected in the high impedance fuse clearing process is exceeded the PDU turns off the current to the loads by controlling the MOSFET Q4 to shut off. The control circuit then continues with the low impedance fuse clearing process using the fuse clearing circuit 17. In the low impedance fuse clearing process the peak pulse current can be increased to a higher current peak level using a series low ohmic resistor R6. The pulse width of the electric pulse can be adjusted to offer an energy content that is equal to the maximum $A^2t$ rating of any one load integral melting fuses when the loads are connected in parallel configuration such that any faulty load melting fuse will be cleared.

The fuse clearing circuit will now be described in more detail. During normal operation C1 is charged to -48V supply voltage at the junction of D1 and R6 with respect to the ground 12 of the circuit. The bipolar transistors Q1 and Q2 and their associated components form the high sided drive circuitry for the series MOSFET switch Q3. The series -48V line resistor R6 limits the maximum current that can be sourced from the circuit during its operation. Zener diode D2 limits the maximum gate to source voltage of the Q3 MOSFET switch. Diodes D3 and D1 block the discharge of C1 capacitor during the circuit operation. In this implementation of the circuit, the on time and as such the total energy available from the fuse clearing circuit is controlled by the controller 10.

At the start of the low impedance fuse clearing process the controller 10 will turn Q2 on by pulling its base voltage high with respect to the -48V at the rail 11. The collector of Q2 will turn on and take its collector towards the -48V at the rail 11. This in turn will bias on the PNP transistor Q1 which will then provide the gate voltage to Q3 series pass MOSFET switch. The action of Q1 turning on reverses the voltage on C1 and provides a positive voltage at junction of C1 / D3 and ensure that there is sufficient gate to source voltage potential on the series pass MOSFET Q3 to maintain its operation when fully on. The diodes D1 and D3 prevent a quick discharge of C1 during the on period of Q1 and the low impedance fuse clearing is in operation. The selection of resistor chain R2 and R5 are crucial to ensure that C1 discharges at a controlled rate maintaining sufficient charge on C1 to allow for the full energy discharge into the highest $A^2t$ fuse rating of all the loads that are connected in parallel.

It would be possible to use the low impedance fuse clearing process for all detected faults of the loads. However, this would not clear a fault associated with a high fault impedance. Loads or load faults will take as much current as the load or fault requires. In a good load the load sees no stress. Low impedance fuse clearing can apply stress to the current limiting resistor R6 (Fig. 2) and the series MOSFET Q3 (Fig. 2). For this reason the time of the second current pulse is limited.

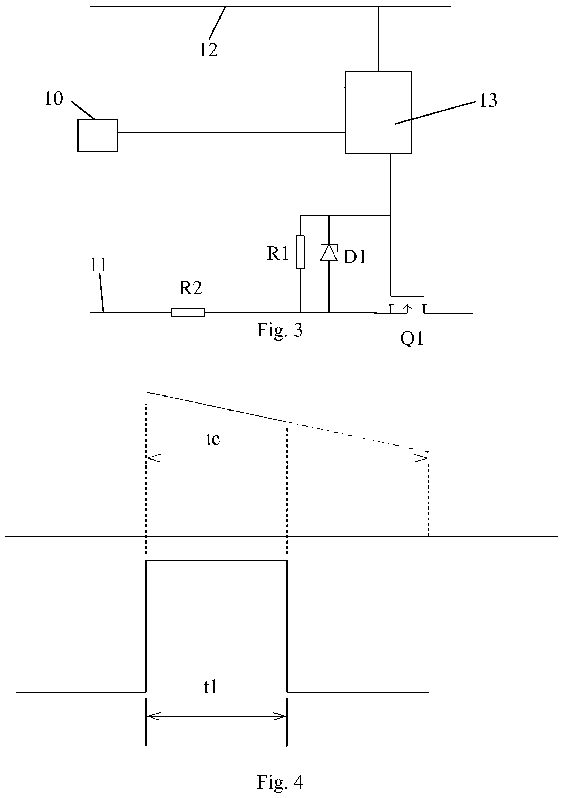

Figure 3 shows the fuse clearing circuit of the control circuit according to a second implementation of the present invention. In Figure 3 the discrete components used for the control of the series switch to employ the use of the low impedance fuse clearing have been replaced with a single high end MOSFET switch driver 13. C1 and its associated blocking diodes used in the embodiment of Fig 2 to maintain the supply of a gate voltage for the series switch Q3 as presented in Figure 3, are removed and the gate supply voltage for Q1 is generated within the driver 13.

Figure 4 presents the relationship necessary between C1 discharge voltage set by R2 and R5 and the pulse width of the controlling pulse from the controller 10. The time period tc corresponds to the time period the voltage over the capacitor C1 exceeds the minimum desired sum of the voltage over the faulty load with its fuse and the voltage across the series MOSFET during discharge. Time t1 corresponds to the pulse width of the controlling pulse from controller 10 and is a second preset time period. The second preset time period t1 should not exceed tc in order to provide a reliable function of the fuse clearing circuit where the voltage over tc should not fall to a level that prevents Q3 from operating in saturation.

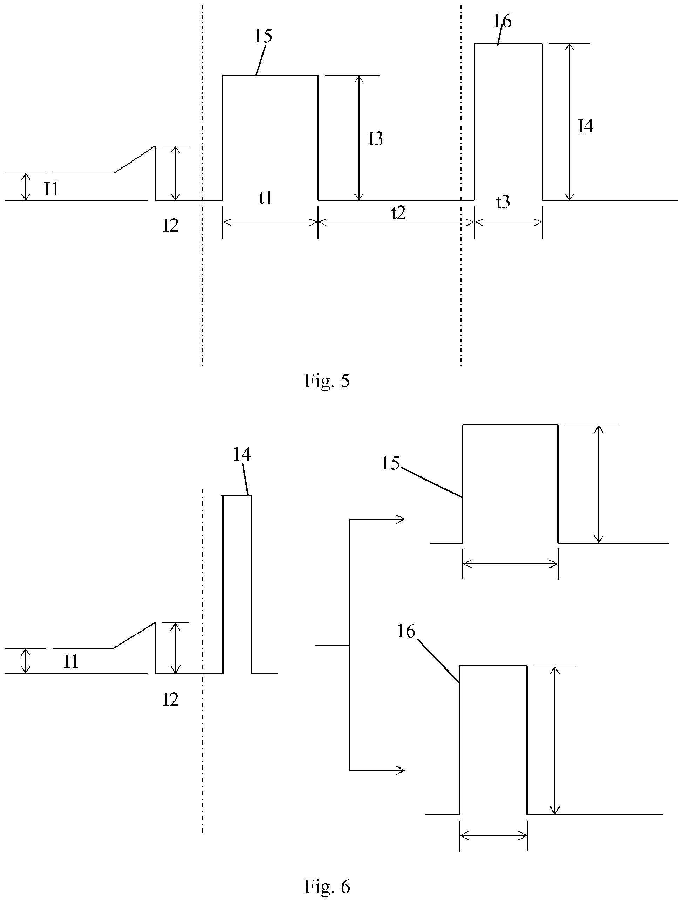

Figure 5 shows the fuse clearing sequence to clear the fuse of a faulty load. The first section of the waveform presented in Figure 5 presents a loading situation where the current drawn by the connected loads increases to nominal preset current limit 12 which is above the nominal load current 11. As a result the PDU controls the current on the output to zero. The increase of the current from 11 to 12 might be due to a fault condition within one of the loads. After the current has been controlled to zero the high impedance fuse clearing process is commenced by sending out the first electric pulse during the first preset time period t1.

The peak current 13 of the first electric pulse is set to meet the maximum current set point rating of the PDU. The pulse width t1 is resolved by:

Maximum current rating of any one of the parallel loads 'X' (minus)
The channel over current set point here termed "Y" (resulting)
The difference between the maximum fuse rating of any one load fitted in the parallel configuration to the respective channel over current set point here termed 'Z'
And continuing,
The maximum $A^2t$ energy rating in joules and herein termed J, of any one the integral fuse fitted to any one load of the parallel or single connected loads resulting in the formula for 't' based on the $Z^2$ of:

$$X-Y=Z$$

and
$t=J/Z^2$ which is assimilated to the recognised formula

$J=A^2t$ for fuse clearing energy which when transposed $t=J/A^2$ where A denotes Amperes.

The fuse clearing can initially be broken down into two sections, the first section detailing the load failure through excess load current demand above a preset limit and the second section detailing the high impedance fuse clearing electric pulse delivered potentially at the maximum current set point of the PDU. The pulse width t1 is dependent on the maximum $A^2t$ of the melting fuse ratings for the fuses connected to the loads. The peak current denoted by 13 indicates the possible real load current during high impedance fuse clearing. The peak current 13 depends on the impedance of the loads and in particular on the impedance of the faulty load. In case the impedance of the faulty load is low the peak current may exceed the maximum current set point of the PDU. In that case the current is shut off and the low impedance fuse clearing is started as shown in the last section in Figure 5. I4 is the peak source current available for fuse clearing and is preset by the value of R6. The time t3 is the pulse width or duration of the second electric pulse. The time period t3 dictates the level of energy dissipated in any potential faulty load integral melting fuse. The selection of the energy rating of R6 in terms of its own $A^2t$ rating must be commensurate with the maximum energy required to melt the highest $A^2t$ of the parallel loads connected to a single output of the controlled power distributor module. It is possible to include an evaluation step after the first electric pulse to determine whether the fuse of the faulty load has been cleared. This may be performed in the same way as when the fault was detected, i.e., by measuring the current during normal operation and comparing it with the nominal preset current limit.

Figure 6 shows an electric pulse sequence whereby the load impedance is measured and the fuse clearing process is selected based on the measured impedance in accordance with an illustrative example provided to enable better understanding of the present invention. As shown in Figure 6 the current increases from 11 to 12 due to a faulty load. After the current has been controlled to zero an impedance measurement pulse 14 is output to the loads and the impedance is measured in a suitable manner. Such measurements are well known to persons skilled in the art and will therefore not be described in detail herein. The measured impedance is compared with a reference value and if the measured impedance is above the reference value the control circuit determines to send out the first electric pulse. If the measured impedance is below the reference value the second electric pulse is sent out.

In order to be able to apply a sufficiently high energy in the second electric pulse it is necessary to have the characteristics of the fuses available. This data may be forwarded to the controller 10 when a fault of a load has been identified.

In the described embodiments the controller has been shown as a separate unit. It is, however, possible to integrate the controller 10 and the PDU in a common circuit.

The scope of protection shall be defined by the appended claims.

## Claims

1. A method for controlling a control circuit (1) comprising a controlled power distributor (8) connected to at least two electrical loads (2, 3, 4) connected in parallel, the controlled power distributor (8) being arranged to provide the electrical loads (2, 3, 4) with electrical power, wherein an electric melting metal fuse (5, 6, 7) is connected in series with each electrical load, the method comprising the steps of:

   monitoring the total current provided to the electrical loads (2, 3, 4), and in case the total current from the control circuit (1) during normal operation exceeds a nominal preset current limit (12), providing a first electric pulse (15) to the loads (2, 3, 4) during a preset first time period (t1) at a current set to a clearing current limit (13) which is higher than the nominal preset current limit (12) with the purpose of clearing a fuse (5, 6, 7) connected to a faulty load; and
   in case the total current exceeds the clearing current limit (13), providing a second electric pulse (16) to the loads (2, 3, 4) during a preset second time period (t3) with the purpose of clearing the fuse (5, 6, 7) connected in series with the faulty load, wherein the current in the second electric pulse (16) is higher than the current in the first electric pulse (15) and wherein the second time period is shorter than the first time period.

2. The method according to claim 1, wherein the first electric pulse (15) is provided by the controlled power distributor (8) which provides the electrical loads (2, 3, 4) with electric power.

3. The method according to claim 2, wherein the clearing current limit (13) of the first electric pulse (15) is provided by driving the controlled power distributor (8) essentially at its maximum output current.

4. The method according to claim 1, wherein the energy in the first pulse (15) is sufficiently high to allow the fuse (5, 6, 7) having the highest fuse clearing energy and being connected to the highest fault impedance, to be cleared.

5. The method according to claim 1, wherein the second electric pulse (16) is provided by a fuse clearing circuit (17) being part of the control circuit (1) but separate from the controlled power distributor (8).

6. The method according to claim 1, wherein the energy in the second pulse (16) is sufficiently high to allow the fuse (5, 6, 7) having the highest fuse clearing energy and being connected to the lowest fault impedance, to be cleared.

7. The method according to claim 1, wherein the length of the first pulse is 100-3000 ms.

8. The method according to claim 1, wherein the length of the second pulse is 30-150 ms.

9. Control circuit (1) for controlling the operation of electrical loads (2, 3, 4) which are connected in parallel with each other and which each are connected in series with an electric melting metal fuse (5, 6, 7), the control circuit (1) comprising a controlled power distributor (8) for providing electric power to the loads (2, 3, 4) during normal operation of the control circuit (1), whereby the control circuit (1) is arranged to monitor the total current provided to the electrical loads (2, 3, 4) and in case the total current during normal operation of the control circuit exceeds a nominal preset current limit (12), provide a first electric pulse (15) to the loads during a preset first time period (t1) at a current set to a clearing current limit (13) which is higher than the nominal preset current limit (12), with the purpose of clearing a fuse connected to a faulty load; **characterised in that** the control circuit (1) is further arranged to, in case the total current exceeds the clearing current limit (13), provide a second electric pulse (16) to the loads (2, 3, 4) during a preset second time period (t3) with the purpose of clearing the fuse connected in series with the faulty load, wherein the current in the second electric pulse (16) is higher than the current in the first electric pulse (15) and wherein the second time period is shorter than the first time period.

10. The control circuit (1) according to claim 9, wherein the first electric pulse (15) is provided by the controlled power distributor (8) which provides the electrical loads (2, 3, 4) with electric power.

11. The control circuit (1) according to claim 10, wherein the control circuit (1) is arranged to provide the clearing current limit (13) of the first electric pulse (15) by driving the controlled power distributor (8) essentially at its maximum output current.

12. The control circuit (1) according to claim 9, wherein the energy in the first electric pulse (15) is arranged to be sufficiently high to allow the fuse (5, 6, 7) having the highest fuse clearing energy and being connected to the highest fault impedance, to be cleared.

13. The control circuit (1) according to claim 9, also comprising a fuse clearing circuit (17) which is arranged to provide the second electric pulse (16) to the loads (2, 3, 4) with the purpose of clearing the fuse (5, 6, 7) connected in series with the faulty load.

14. The control circuit (1) according to claim 9, wherein the energy in the second electric pulse is arranged to be sufficiently high to allow the fuse (5, 6, 7) having the highest fuse clearing energy and being connected to the lowest fault impedance, to be cleared.

15. The control circuit (1) according to claim 9, wherein the length of the first pulse is 100-3000 ms.

16. The control circuit (1) according to claim 9, wherein the length of the second pulse is 30-150 ms.


**Patentansprüche**

1. Verfahren zum Steuern einer Steuerschaltung (1), die einen gesteuerten Leistungsverteiler (8) umfasst, der mit mindestens zwei elektrischen Lasten (2, 3, 4), die parallelgeschaltet sind, verbunden ist, wobei der gesteuerte Leistungsverteiler (8) ausgelegt ist, die elektrischen Lasten (2, 3, 4) mit elektrischer Leistung zu versorgen, wobei eine elektrische Schmelzmetallsicherung (5, 6, 7) mit jeder elektrischen Last in Reihe geschaltet ist, wobei das Verfahren die folgenden Schritte umfasst:

Überwachen des Gesamtstroms, der für die elektrischen Lasten (2, 3, 4) bereitgestellt wird, und falls der Gesamtstrom von der Steuerschaltung (1) während eines normalen Betriebs einen nominalen voreingestellten Stromgrenzwert (I2) überschreitet, Bereitstellen eines ersten elektrischen Impulses (15) während einer voreingestellten ersten Zeitperiode (t1) bei einem Strom, der auf einen Löschstromgrenzwert (I3) eingestellt ist, der höher als der nominale voreingestellte Stromgrenzwert (I2) ist, für die Lasten (2, 3, 4) mit dem Ziel, eine Sicherung (5, 6, 7), die mit einer fehlerhaften Last verbunden ist, zu löschen; und
falls der Gesamtstrom den Löschstromgrenzwert (I3) überschreitet, Bereitstellen eines zweiten elektrischen Impulses (16) während einer voreingestellten zweiten Zeitperiode (t3) für die Lasten (2, 3, 4) mit dem Ziel, die Sicherung (5, 6, 7), die mit der fehlerhaften Last in Reihe geschaltet ist, zu löschen, wobei der Strom in dem zweiten elektrischen Impuls (16) höher ist als der Strom in dem ersten elektrischen Impuls (15) und wobei die zweite Zeitperiode kürzer ist als die erste Zeitperiode.

2. Verfahren nach Anspruch 1, wobei der erste elektrische Impuls (15) durch den gesteuerten Leistungsverteiler (8) bereitgestellt wird, der die elektrischen Lasten (2, 3, 4) mit elektrischer Leistung versorgt.

3. Verfahren nach Anspruch 2, wobei der Löschstromgrenzwert (I3) des ersten elektrischen Impulses (15) durch Ansteuern des gesteuerten Leistungsverteilers (8) im Wesentlichen mit seinem maximalen Ausgangsstrom bereitgestellt wird.

4. Verfahren nach Anspruch 1, wobei die Energie in dem ersten Impuls (15) genügend hoch ist, um zu erlauben, dass die Sicherung (5, 6, 7), die die höchste Sicherungslöschenergie hat und mit der höchsten Fehlerimpedanz verbunden ist, gelöscht wird.

5. Verfahren nach Anspruch 1, wobei der zweite elektrische Impuls (16) durch eine Sicherungslöschschaltung (17), die Teil der Steuerschaltung (1) ist, aber von dem gesteuerten Leistungsverteiler (8) getrennt ist, bereitgestellt wird.

6. Verfahren nach Anspruch 1, wobei die Energie in dem zweiten Impuls (16) genügend hoch ist, um zu erlauben, dass die Sicherung (5, 6, 7), die die höchste Sicherungslöschenergie hat und mit der niedrigsten Fehlerimpedanz verbunden ist, gelöscht wird.

7. Verfahren nach Anspruch 1, wobei die Länge des ersten Impulses 100-3000 ms beträgt.

8. Verfahren nach Anspruch 1, wobei die Länge des zweiten Impulses 30-150 ms beträgt.

9. Steuerschaltung (1) zum Steuern des Betriebs elektrischer Lasten (2, 3, 4), die zueinander parallelgeschaltet sind und jeweils mit einer elektrischen Schmelzmetallsicherung (5, 6, 7) in Reihe geschaltet sind, wobei die Steuerschaltung (1) einen gesteuerten Leistungsverteiler (8) zum Bereitstellen elektrischer Leistung während eines normalen Betriebs der Steuerschaltung (1) für die Lasten (2, 3, 4) umfasst, wobei die Steuerschaltung (1) ausgelegt ist, den Gesamtstrom, der für die elektrischen Lasten (2, 3, 4) bereitgestellt wird, zu überwachen und falls der Gesamtstrom während eines normalen Betriebs der Steuerschaltung einen nominalen voreingestellten Stromgrenzwert (I2) überschreitet, einen ersten elektrischen Impuls (15) während einer voreingestellten ersten Zeitperiode (t1) mit einem Strom, der auf einen Löschstromgrenzwert (I3) eingestellt ist, der höher als der nominale voreingestellte Stromgrenzwert (I2) ist, für die Lasten bereitzustellen, mit dem Ziel, eine Sicherung zu löschen, die mit einer fehlerhaften Last verbunden ist;
**dadurch gekennzeichnet, dass** die Steuerschaltung (1) ferner ausgelegt ist, falls der Gesamtstrom den Löschstromgrenzwert (I3) überschreitet, einen zweiten elektrischen Impuls (16) während einer voreingestellten zweiten Zeitperiode (t3) für die Lasten (2, 3, 4) bereitzustellen, mit dem Ziel, die mit der fehlerhaften Last in Reihe geschaltete Sicherung zu löschen, wobei der Strom in dem zweiten elektrischen Impuls (16) höher ist als der Strom in dem ersten elektrischen Impuls (15) und wobei die zweite Zeitperiode kürzer ist als die erste Zeitperiode.

10. Steuerschaltung (1) nach Anspruch 9, wobei der erste elektrische Impuls (15) durch den gesteuerten Leistungsverteiler (8) bereitgestellt wird, der die elektrischen Lasten (2, 3, 4) mit elektrischer Leistung versorgt.

11. Steuerschaltung (1) nach Anspruch 10, wobei die Steuerschaltung (1) ausgelegt ist, den Löschstromgrenzwert (I3) des ersten elektrischen Impulses (15) durch Ansteuern des gesteuerten Leistungsverteilers (8) im Wesentlichen mit seinem maximalen Ausgangsstrom bereitzustellen.

12. Steuerschaltung (1) nach Anspruch 9, wobei die Energie in dem ersten elektrischen Impuls (15) ausgelegt ist, genügend hoch zu sein, um zu erlauben, dass die Sicherung (5, 6, 7), die die höchste Sicherungslöschenergie hat und mit der höchsten Fehlerimpedanz verbunden ist, gelöscht wird.

13. Steuerschaltung (1) nach Anspruch 9, die außerdem eine Sicherungslöschschaltung (17) umfasst, die ausgelegt ist, den zweiten elektrischen Impuls (16) für die Lasten (2, 3, 4) bereitzustellen, mit dem Ziel, die Sicherung (5, 6, 7), die mit der fehlerhaften Last in Reihe geschaltet ist, zu löschen.

14. Steuerschaltung (1) nach Anspruch 9, wobei die Energie in dem zweiten elektrischen Impuls ausgelegt ist, genügend hoch zu sein, um zu erlauben, dass die Sicherung (5, 6, 7) die die höchste Sicherungslöschenergie hat und mit der niedrigsten Fehlerimpedanz verbunden ist, gelöscht wird.

15. Steuerschaltung (1) nach Anspruch 9, wobei die Länge des ersten Impulses 100-3000 ms beträgt.

16. Steuerschaltung (1) nach Anspruch 9, wobei die Länge des zweiten Impulses 30-150 ms beträgt.

**Revendications**

1. Procédé pour commander un circuit de commande (1) comprenant un distributeur d'énergie commandé (8) connecté à au moins deux charges électriques (2, 3, 4) connectées en parallèle, le distributeur d'énergie commandé (8) étant agencé pour fournir aux charges électriques (2, 3, 4) de l'énergie électrique, un fusible métallique à fusion électrique (5, 6, 7) étant connecté en série avec chaque charge électrique, le procédé comprenant les étapes suivantes :

la surveillance du courant total fourni aux charges électriques (2, 3, 4), et dans le cas où le courant total provenant du circuit de commande (1) pendant le fonctionnement normal dépasse une limite de courant nominale préréglée (I2), la fourniture d'une première impulsion électrique (15) aux charges (2, 3, 4) pendant une première période de temps préréglée (t1) à un courant réglé à une limite de courant de désamorçage (I3) qui est supérieure à la limite de courant nominale préréglée (I2) dans le but de désamorcer un fusible (5, 6, 7) connecté à une charge défectueuse ; et
dans le cas où le courant total dépasse la limite de courant de désamorçage (I3), la fourniture d'une seconde impulsion électrique (16) aux charges (2, 3, 4) pendant une seconde période de temps prédéfinie (t3) dans le but de désamorcer le fusible (5, 6, 7) connecté en série avec la charge défectueuse, le courant dans la seconde impulsion électrique (16) étant supérieur au courant dans la première impulsion électrique (15) et la seconde période de temps étant plus courte que la première période de temps.

2. Procédé selon la revendication 1, la première impulsion électrique (15) étant fournie par le distributeur d'énergie commandé (8) qui alimente les charges électriques (2, 3, 4) en énergie électrique.

3. Procédé selon la revendication 2, la limite de courant de désamorçage (I3) de la première impulsion électrique (15) étant fournie en pilotant le distributeur d'énergie commandé (8) essentiellement à son courant de sortie maximal.

4. Procédé selon la revendication 1, l'énergie dans la première impulsion (15) étant suffisamment élevée pour permettre au fusible (5, 6, 7) ayant l'énergie de désamorçage de fusible la plus élevée et étant connecté à l'impédance de défaut la plus élevée, d'être désamorcé.

5. Procédé selon la revendication 1, la seconde impulsion électrique (16) étant fournie par un circuit de désamorçage de fusible (17) faisant partie du circuit de commande (1) mais séparé du distributeur d'énergie commandé (8).

6. Procédé selon la revendication 1, l'énergie de la seconde impulsion (16) étant suffisamment élevée pour permettre au fusible (5, 6, 7) ayant l'énergie de désamorçage de fusible la plus élevée et étant connecté à la plus faible impédance de défaut, d'être désamorcé.

7. Procédé selon la revendication 1, la longueur de la première impulsion étant de 100 à 3000 ms.

8. Procédé selon la revendication 1, la longueur de la seconde impulsion étant de 30 à 150 ms.

9. Circuit de commande (1) pour commander le fonctionnement de charges électriques (2, 3, 4) qui sont connectées en parallèle les unes avec les autres et qui sont chacune connectées en série avec un fusible métallique à fusion électrique (5, 6, 7), le circuit de commande (1) comprenant un distributeur d'énergie commandé (8) pour fournir une énergie électrique aux charges (2, 3, 4) pendant le fonctionnement normal du circuit de commande (1), moyennant quoi le circuit de commande (1) est agencé pour surveiller le courant total fourni aux charges électriques (2, 3, 4) et dans le cas où le courant total pendant le fonctionnement normal du circuit de commande dépasse une limite de courant nominale préréglée (I2), fournir une première impulsion électrique (15) aux charges pendant une première période de temps préréglée (t1) à un courant réglé à une limite de courant de désamorçage (I3) qui est supérieure à la limite de courant nominale préréglée (I2), dans le but de désamorcer un fusible connecté à une charge défectueuse ;
**caractérisé en ce que** le circuit de commande (1) est en outre agencé pour, dans le cas où le courant total dépasse la limite de courant de désamorçage (I3), fournir une seconde impulsion électrique (16) aux charges (2, 3, 4) pendant une seconde période de temps prédéfinie (t3) dans le but de désamorcer le fusible connecté en série avec la charge défectueuse, le courant dans la seconde impulsion électrique (16) étant supérieur au courant dans la première impulsion électrique (15) et la seconde période de temps étant plus courte que la première période de temps.

10. Circuit de commande (1) selon la revendication 9, la première impulsion électrique (15) étant fournie par le distributeur d'énergie commandé (8) qui alimente les charges électriques (2, 3, 4) en énergie électrique.

11. Circuit de commande (1) selon la revendication 10, le circuit de commande (1) étant agencé pour fournir la limite de courant de désamorçage (I3) de la première impulsion électrique (15) en pilotant le distributeur d'énergie commandé (8) essentiellement à son courant de sortie maximal.

12. Circuit de commande (1) selon la revendication 9, l'énergie dans la première impulsion électrique (15) étant agencée pour être suffisamment élevée pour permettre au fusible (5, 6, 7) ayant l'énergie de désamorçage de fusible la plus élevée et étant connecté à l'impédance de défaut la plus élevée, d'être désamorcé.

13. Circuit de commande (1) selon la revendication 9, comprenant également un circuit de désamorçage de fusible (17) qui est agencé pour fournir la seconde impulsion électrique (16) aux charges (2, 3, 4) dans le but de désamorcer le fusible (5, 6, 7) connecté en série avec la charge défectueuse.

14. Circuit de commande (1) selon la revendication 9, l'énergie dans la seconde impulsion électrique étant agencée pour être suffisamment élevée pour permettre au fusible (5, 6, 7) ayant l'énergie de désamorçage de fusible la plus élevée et étant connecté à la plus faible impédance de défaut, d'être désamorcé.

15. Circuit de commande (1) selon la revendication 9, la longueur de la première impulsion étant de 100 à 3000 ms.

16. Circuit de commande (1) selon la revendication 9, la longueur de la seconde impulsion étant de 30 à 150 ms.

Fig. 1

Fig. 2

12

10

13

R1  D1

11

R2

Fig. 3

Q1

tc

t1

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1852951 A

- US 2007008664 A